# EUROPEAN PATENT APPLICATION

(11) **EP 2 960 842 A1**
(43) Date of publication of application: **30.12.2015**
(21) Application number: 14173552.2
(22) Date of filing: 23.06.2014
(51) Int. Cl.: G06Q 10/10, G07C 9/00, G07C 1/00

(54) **Time entry recording system**

(71) Applicant: NXP B.V., 5656 AG Eindhoven (NL)
(72) Inventor: Meyn, Hauke, Redhill, Surrey RH1 1SH (GB); Gallo, Francesco, Redhill, Surrey RH1 1SH (GB); Lesjak, Christian Michael, Redhill, Surrey RH1 1SH (GB)
(74) Representative: Hardingham, Christopher Mark

(57) **Abstract**

A method of operating a time entry recording system, the system comprising a near field communication, NFC, tag associated with a function of the system, an NFC device associated with a user of the system and a computer, the method comprising: the NFC device requesting a message from the NFC tag; the NFC tag generating a message comprising an identifier of the tag and a representation of a counter value; the NFC tag sending the message to the NFC device; the NFC device generating a request comprising the identifier of the tag, an identifier of the user and a representation of the counter value in response to receiving the message; the NFC device sending the request to a computer; and the computer recording a time associated with the function of the system and the identifier of the user on verification of the counter value.

## Description

The invention relates to the field of time entry recording systems.

Time entry recording systems are used, for example, to record the attendance of employees. Typically, an employee will sign in at the beginning of the working day and sign out at the end of his shift.

A known way to implement a time recording system is to supply a register book that people can physically sign in and out of. One disadvantage of this method is that the times recorded in the register are determined by the person whose attendance is being recorded and so a late attendee can easily falsify an earlier recorded time of attendance. A further disadvantage of this manual record of attendance is that the information in the register cannot be easily searched or processed. This later disadvantage can be addressed by providing a computer terminal with a spreadsheet or database that people can sign in and out of. In the case where the computer logs the sign in or sign out time, such a solution can also address the above problem of potential deception associated with self-certified time entries.

In some computerised systems an electronic swipe card is associated with each user of the system. The user can sign in or out by swiping the card over a dedicated card reader. The system then logs the time of the swipe and the identity of the card swiped.

A further problem experienced in the above systems is that people can sign in and sign out on each other's behalf. In the case of swipe cards this may be achieved by users of the system copying the swipe cards, or by lending their cards to one another so that the earliest arrival can sign in on behalf of several people.

According to a first aspect of the present invention there is provided a method of operating a time entry recording system, the system comprising a near field communication, NFC, tag associated with a function of the system, an NFC device associated with a user of the system and a computer, the method comprising:
the NFC device requesting a message from the NFC tag;
the NFC tag generating a message comprising an identifier of the tag and a representation of a counter value;
the NFC tag sending the message to the NFC device;
the NFC device generating a request comprising the identifier of the tag, an identifier of the user and a representation of the counter value in response to receiving the message;
the NFC device sending the request to a computer; and
the computer recording a time associated with the function of the system and the identifier of the user on verification of the counter value.

The function of the system may be to record an arrival (sign in) or a departure (sign out), for example. The NFC device may be provided by a mobile computer or telephone, and may belong to the user of the system. The counter of the tag can be configured to amend the counter value in response to receiving the request from the NFC device according to a predetermined function, which may be as simple as incrementing the counter value. The method can provide that only a phone (and its user) that was in actual physical proximity of the tag, and no other party (such as a hacker or an attacker), is able to access the computer and record a time entry. Users of time entry systems tend not to share their mobile telephones with one another because such devices often contain personal information.

The identifier of the user may comprise authentication data. The computer may generate a request for the user authentication data from the NFC device. The request for the user authentication data may comprise a log-on or password screen. The user authentication data may comprise a password, personal identification code or biometric information associated with the user. Biometric information includes a finger or thumb print, iris scan, or voice pattern of the user, for example. The combination of requesting user authentication and the use of a counter provides a more secure system because a registered user can be discouraged from making anonymous requests that contain invalid counter details without risking detection. As such, an attacker can be discouraged from attempting a trial-and-error-type attack in which a large number of anonymous requests with different possible counter values are attempted in order to obtain a service from the computer. This is because such an attack would have to be associated with a registered user in order to have the possibility of obtaining a service and the unsuccessful attempts may be logged so that action can be taken against the user.

The method may further comprise the NFC tag obfuscating or encrypting the counter value before generating the message. The NFC tag may apply a hash function to the counter value to provide a hashed counter value. The computer may generate one or more hashed expected values corresponding to one or more expected counter values. The one or more expected values may be the subsequent values in a counter value sequence to the most recently received counter value from the tag. The computer may compare the hashed counter value with the one or more hashed expected values in order to determine the counter value from the tag.

The counter value may comprise a time or clock function in order to identify when a device has read the tag and delayed sending a request to the server. A request may not be verified if the counter value is lower than (or earlier in a predetermined sequence than) the last verified counter value, or more than a predetermined number of counts greater than (or later in the predetermined sequence than) the last verified counter value. In the case where the counter value provides a time or clock function, the request may not be verified if a predetermined period of time has elapsed since the time indicated by the counter value.

The method may further comprise the NFC tag signing the message, or at least the counter value and/or the tag identifier, before sending the message to the NFC device.

The message may comprise a uniform resource identifier, URI, for the computer. The URI may include the counter value and the identifier of the tag. The computer may be a remote server on the internet. The uniform resource identifier may be an internet address associated with the computer. An identifier for the computer may be stored on the NFC device.

The NFC device may perform the step of requesting a message and/or generating a request using generic software. Generic software may be able to perform a number of non-proprietary functions or may have standard functions for interacting with other software.

The message may be an NFC Data Exchange Format, NDEF, message.

The method may further comprise the NFC device including sensor data in the message and/or the request. The sensor data may comprise the identifier for the user. The computer may use the sensor data in order to verify the identifier of the user. The method may further comprise the NFC device taking a photograph, such as a photograph of the user, in order to provide the sensor data. The method may further comprise the NFC device recording audio, such as a voice of the user, in order to provide the sensor data. The sensor data may comprise biometric information.

According to a further aspect of the invention there is provided a time entry recording system tag comprising:
a counter for providing a representation of a counter value;
an identifier of the tag; and
a message generator configured, in response to receiving a request from a NFC device associated with a user of the time entry recording system, to provide the NFC device with a message comprising the identifier of the tag and the representation of the counter value, and at least a signature-protected counter value and identifier,
   wherein the tag is associated with a function of the time entry recording system.

According to a further aspect of the invention there is provided a computer for a time entry recording system, configured to:
receive a request from a NFC device, the request comprising:
   an identifier of the tag that is associated with a function of a time entry recording system, and
   a representation of a counter value;
verify the counter value; and
verify the signature value; and
record a time associated with the function of the system and a user of the NFC device.

According to a further aspect of the invention there is provided a building comprising a tag as described above mounted on, which includes inside, the building.

Also disclosed is a system, for example a time entry recording system, comprising a near field communication, NFC, tag associated with a function of the system, an NFC device associated with a user of the system and a computer.

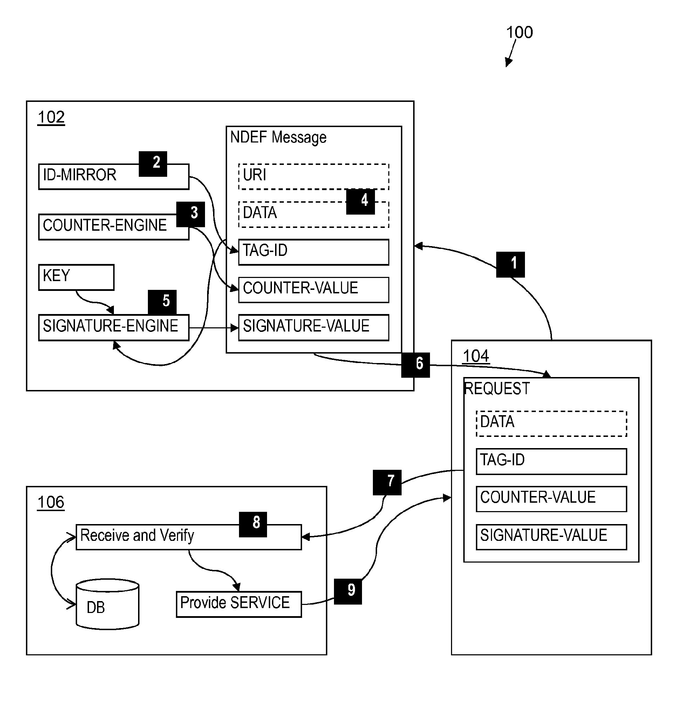

Embodiments will now be described by way of example with reference to the accompanying figure, in which Figure 1 illustrates a time entry recording system that is used to illustrate a method of operating the time entry recording system.

Identification products, such as smart cards and RFID tags, are widely used in fields such as transport (ticketing, road tolling, baggage tagging), finance (debit and credit cards, electronic purse, merchant card), communications (SIM card for GSM phone), and tracking (access control, inventory management, asset tracking). RFID is an acronym of radio frequency identification. International standard ISO14443A is the industry standard for contactless smart cards. ISO14443A-compliant products such as MIFARE provide RF communication technology for transmitting data between a card or tag and a reader device. For example, in electronic ticketing for public transport, travelers wave their card over a reader at the turnstiles or entry point, benefiting from improved convenience and speed in the ticketing process. Such products are said to be the key to individual mobility in the future, supporting multiple applications including road tolling, airline tickets, access control and many more.

Evolving from a combination of contactless identification and networking technologies, near field communication (NFC) is a very short-range wireless technology, for distances measured in centimeters. NFC technology can be applied to consumer electronics devices such as mobile telephones and personal computers, for example.

NFC has been described on the website http://www.nxp.com/nfc and in the standard ISO/IEC 18092. NFC technology is optimized for intuitive, easy and secure communication between various devices without the need for manual configuration by a user. In order to make two devices communicate, users bring them close together or make them touch. The devices comprise NFC interfaces that will automatically connect and configure themselves to form a peer-to-peer network. NFC can also bootstrap other protocols like Bluetooth or wireless Ethernet (Wi-Fi) by exchanging configuration and session data. NFC is compatible with contactless smart card platforms. This enables NFC devices to read information from these cards, making contactless smart cards the ideal solution for bringing information and vouchers into the NFC world. NFC devices can also operate like a contactless card or tag, which makes them compatible with the existing infrastructure of ISO14443A-compliant systems.

The NFC Forum (http://www.nfc-forum.org/) is a non-profit industry association which promotes the use of NFC short-range wireless interaction in the fields of consumer electronics, mobile devices and personal computers. The NFC Forum promotes the implementation and standardization of NFC technology to ensure interoperability between devices and services.

Figure 1 illustrates a time entry recording system. The time entry recording system 100 comprises a near field communication, NFC, tag 102, an NFC device 104 associated with a user of the system 100 and a computer 106. The NFC device 104 may be provided by an NFC enabled smart phone and the computer 106 acts as a backend information system, or server.

The NFC tag 102 is associated with a function of the system 100. Examples of functions of the system include "sign in" and "sign out". The tag 102 in this example is configured to provide a number of NFC functions, including an ID-MIRROR, a COUNTER-ENGINE, a KEY, a SIGNATURE-ENGINE and to generate a NFC data exchange format, NDEF, message. The message is a data structure that may be stored in a computerized memory or transmitted in a network of two or more apparatus.

The ID-MIRROR function provides a TAG-ID which acts as an identifier of the tag 102 that enables the tag 102 to be uniquely identified in the context of the system 100. The TAG-ID may be stored in a memory of the tag 102. The TAG-ID can be incorporated into the NDEF message at a predefined location, using the ID-MIRROR functionality.

The COUNTER-ENGINE function updates a COUNTER-VALUE (according to a specific rule) upon each tag read and incorporates the COUNTER-VALUE into the NDEF message at a predefined location. The COUNTER-VALUE generated in this example is not in an obvious form. For example, the COUNTER-VALUE may appear to be a pseudo-random number (which is an example of an obfuscated COUNTER-VALUE) or may be encrypted using a secret key (to provide an encrypted COUNTER-VALUE). The obfuscated or encrypted COUNTER-VALUEs are each an example of a representation of a COUNTER-VALUE. The COUNTER-VALUE itself can also be considered to be a representation of the COUNTER-VALUE. An encrypted COUNTER-VALUE can be derived from an internal, private counter within the COUNTER-ENGINE by applying a hash or encryption function. By obfuscating or encrypting the counter value it is harder for an attacker to determine the actual COUNTER-VALUE and easier to keep the number of tag taps, or reads, private.

The SIGNATURE-ENGINE calculates a digital signature over a pre-defined memory area of the NDEF message, including the COUNTER-VALUE and TAG-ID, using a pre-defined, secret key. The SIGNATURE-ENGINE then incorporates the SIGNATURE-VALUE into the NDEF message at a predefined location.

The SIGNATURE-VALUE can, for example, be based on either:
- Asymmetric cryptography, such as elliptic curve digital signature algorithm, ECDSA, where a secret, private key is stored securely inside the tag and the computer 106 knows the corresponding public key (via the TAG-ID), or
- Symmetric cryptography, such as a hash message authentication code, HMAC (but also any other MAC), where a secret key is stored securely inside the tag and shared with the computer 106 (via the TAG-ID).

The NFC tag 102 is configured to receive a read command and, in response to being read, generate the NDEF message. The NDEF message generated by the tag 102 therefore comprises the TAG-ID, COUNTER VALUE and SIGNATURE-VALUE. The generated NDEF message is then sent to the NFC device 104 by the tag 102.

The device 104 is an NFC Forum device and to is capable of reading the NDEF message according to the NFC Forum Type Tag Operation specification. The device 104 is also capable of generating a REQUEST for sending to the server 106 including information received from the tag 102. That is, the REQUEST includes the TAG-ID, COUNTER VALUE and SIGNATURE-VALUE. The REQUEST also includes an identifier for the user (not shown) which may include data associated with the device 104. The identifier may, for example, be a serial number associated with the device 104 or with a service identification module associated with the device 104. The identifier may comprise user authentication information, which may be requested from the user dynamically or stored on the device. In the case where the information is requested from the user, the information may comprise a password, personal identification code or biometric information associated with the user. In the case where the information is stored on the device, the authentication or identification information may be provided in a secure area of memory of the device 104 to make the device 104 less "clonable" and so the system 100 more secure.

The REQUEST to the computer 106 is a data structure that may be stored in a computerized memory or transmitted in a network of two or more apparatus. The REQUEST to the computer 106 may be any kind of internet based communication, such as a request to access a website, download data representative of a specific content, or a communication with a web-service offered by the server. The REQUEST endpoint may either be indicated by a universal resource identifier, URI, which is provided in the NDEF message generated by the NFC tag 102, or may be known to software on the device 104 that processes the data received from the NFC tag 102 and carries out the request.

The reading and requesting functionality of the device 104 may be implemented using generic software. The generic software may be able to perform a number of non-proprietary functions or may have standard functions for interacting with other software. The generic software may only use open protocols that are available to the public so that third party developers can implement them in software. A web browser is an example of a piece of generic software because the functions of communicating with a web server are the subject of agreed standards; HTML and CSS are examples of open protocols. The NDEF message format is also an example of an open protocol.

The computer 106 is configured to receive the REQUEST from the device 104. The REQUEST can be sent to the computer 106 via the internet.

For REQUEST verification, the server in this example utilizes a database DB of all TAG-IDs in the system 100 and corresponding cryptographic keys for signature verification, and a set of all COUNTER-VALUEs received from each tag 102. On verification of the COUNTER-VALUE in the request, the computer 106 provides a service that includes recording a time that is associated with both the function of the system (for example "sign in" or "sign out") that corresponds to the tag 102 and the identifier of the user.

Using the COUNTER-VALUE, the computer 106 can track the number of tag reads. Each tag read need not necessarily have resulted in a REQUEST being sent to the computer 106. For example, if the reading device 104 was offline, or did not have an application installed to create and send the REQUEST to the computer 106.

In order to verify the COUNTER-VALUE, the computer 106 determines the COUNTER-VALUE from the obfuscated COUNTER-VALUE. For a COUNTER-VALUE obfuscated by a hash function, this may be achieved by calculating hash values for one or more, optionally a range of, expected next counter values (depending on previously received COUNTER-VALUES) and comparing the hash values with the received COUNTER-VALUE. If two hash values match, the computer 106 has determined the corresponding COUNTER-VALUE. The corresponding COUNTER-VALUE can be used to verify the REQUEST. The possibility of there being gaps in the received COUNTER-VALUE sequences means that a received COUNTER-VALUE may be a pre-determined number of counts further along the sequence than the last received counter value. For this reason, the computer 106 may compare the received hashed COUNTER-VALUE with a number of potential hashed COUNTER-VALUEs in order to identify the corresponding COUNTER-VALUE. For a COUNTER-VALUE obfuscated by encryption, the computer 106 takes the corresponding secret or public key to recover the actual COUNTER-VALUE. In this case, the actual COUNTER-VALUE can be used to verify the REQUEST.

Multiple REQUESTS with the same COUNTER-VALUE can be rejected as invalid. A record of invalid tag reads by a user may be made so that attempted deception can be determined.

The system illustrated in Figure 1 enables a time entry recording system comprising a sign in or sign out tag to be implemented and is discussed below with reference to the numerals 1 to 9.

Two dedicated tags 102 can be mounted at the entrance to a building. One tag is associated with the sign in, or "come", function, and the other tag is associated with the sign out, or "leave", function. Once an employee enters the building in the morning, he touches the "come" tag with his smart phone 104, which forwards information regarding his arrival to the backend computer 106. When the employee leaves at the end of the day, he touches the "leave" tag, which forwards information regarding his departure to the backend computer 106. In both cases, the backend computer 106 uses the method presented below to detect potential misuse of, or attacks on, the system 100 such as by an employee lying about when he actually left by using modified phone software that postpones sending the "leave" request to the computer 106 or if an unauthorized user is attempting to interact with the time entry recording system. In this way, the security and integrity of the system is improved.

The device 104 sends 1 a read command to initiate the process of reading an NDEF message from the tag 102. As a consequence, the tag 102 dynamically generates the NDEF message in the following steps 2 to 5. The order of steps 2 to 5 can, in general, be varied.

The tag 102 incorporates 2 the TAG-ID into the NDEF message using the ID-MIRROR function. The TAG-ID is used by the computer 106 to know which tag 102 was involved and infer the correct function (such as arrive or leave) associated with the tag.

The tag 102 changes, by increasing or incrementing for example, the COUNTER-VALUE and incorporates the changed COUNTER-VALUE into the NDEF message using the COUNTER-ENGINE function. The COUNTER-ENGINE function of the tag 102 also saves or overwrites the COUNTER-VALUE that is stored in the memory of the tag 102 with the changed COUNTER-VALUE. The COUNTER-VALUE may comprise time information in order to reduce the risk of a modified device reading the tag 102 and sending a delayed request to the server.

The tag 102 optionally copies 4 additional dynamic data from external sources, such as sensors, into the NDEF message. The sensors may collect biometric data from the user. The sensor data may comprise an image of the user or a sound recording which may be verified as being attributable to the user by the computer 106. In addition or alternatively, the device 104 may obtain the image or sound recordings using built in sensors, as discussed below in step 6.

The tag 102 calculates 5 the SIGNATURE-VALUE over a defined area of the NDEF message, covering at least the COUNTER-VALUE and TAG-ID. In general, one more portions of the NDEF message (with the exception of the SIGNATURE-VALUE) may be included into the SIGNATURE-VALUE. The securely stored KEY may be used for the SIGNATURE-VALUE calculation. The SIGNATURE-VALUE is incorporated into the NDEF message.

The tag 102 transfers 6 the content of the NDEF message to the device 104. When received, the device 104 builds the REQUEST to be sent to the computer 106. The REQUEST includes the optional DATA, as well as the TAG-ID, COUNTER-VALUE, and the SIGNATURE-VALUE, all as received from the tag 102. The device 104 may also at this stage capture the optional data by recording audio with a microphone or taking a photograph with a camera of the device 104.

The device 104 sends 7 the REQUEST to the computer 106. The endpoint (the address of the computer 106) is specified either in an optional universal resource identifier, URI, which may be part of the previously received NDEF message, or in memory associated with the device 104, for example as part of its software configuration. The URI may be a universal resource locator, URL. The URL may comprise the TAG-ID and COUNTER-VALUE.

An attacker against a system is anyone who aims to circumvent the intended purpose of the system. An attacker may, for example, attempt to exploit the system by modifying software running on the device 104. Hence, the computer 106 needs to validate incoming REQUESTS in order to determine whether they originate from a legitimate user or from the attacker.

The computer 106 receives 8 the REQUEST and validates it, for example, by -
- Querying the database (DB) and checking that the TAG-ID is known.
- Querying the database and retrieving the KEY associated with the SIGNATURE-VALUE.
- Verifying whether the SIGNATURE-VALUE from the REQUEST is correct using the KEY.
   o This ensures that the REQUEST is authentic (from the tag 102).
- Querying the database DB for previous COUNTER-VALUEs from this TAG-ID and checking that the received COUNTER-VALUE is later in a predetermined sequence of the COUNTER-VALUEs.
   o This ensures that the REQUEST is unique and determines the sequence in which tag reads of multiple users are made because no new COUNTER-VALUEs that are smaller than or equal to the last received COUNTER-VALUE are accepted as valid by the computer 106. Furthermore, proximity between the tag 102 and device 104 has been proven because the REQUEST must have been created by the device 104 touching the tag 102 (due to the signature and the ever increasing counter).
- If the REQUEST includes the optional DATA, the integrity and authenticity of this DATA is verifiable for the server using, for example, image or voice recognition or other biometric authentication protocols.
- Updating the database DB by adding the newly received COUNTER-VALUE for the TAG-ID.
- If any of the above steps fail, the attempt is logged by the computer 106 and REQUEST is rejected.

The computer 106 provides 9 the service of recording a time associated with the function of the system and the identifier of the user on verification of the TAG-ID, COUNTER-VALUE and optional DATA. This may optionally comprise sending data to the device 104, such as an acknowledgement, receipt or other information or electronic resource. For example, the computer may indicate to the user via the device 104 that his "come" or "leave" indication has been successfully recorded.

It will be appreciated that any reference to "higher than", "greater than, "lower than", or "less than, etc, can refer to the parameter in question being less than or greater than a threshold value, or between two threshold values, depending upon the context.

## Claims

1. A method of operating a time entry recording system, the system comprising a near field communication, NFC, tag associated with a function of the system, an NFC device associated with a user of the system and a computer, the method comprising:
the NFC device requesting a message from the NFC tag;
the NFC tag generating a message comprising an identifier of the tag and a representation of a counter value;
the NFC tag sending the message to the NFC device;
the NFC device generating a request comprising the identifier of the tag, an identifier of the user and a representation of the counter value in response to receiving the message;
the NFC device sending the request to a computer; and
the computer recording a time associated with the function of the system and the identifier of the user on verification of the counter value.

2. The method of claim 1 wherein the identifier of the user comprises authentication data.

3. The method of claim 1 or claim 2 further comprising the NFC tag obfuscating or encrypting the counter value before generating the message.

4. The method of claim 3 comprising:
the NFC tag applying a hash function to the counter value to provide a hashed counter value;
the computer generating one or more hashed expected values corresponding to one or more expected counter values; and
the computer comparing the hashed counter value with the one or more hashed expected values in order to determine the counter value from the tag.

5. The method of any preceding claim further comprising the NFC tag signing the message (or at least the counter value and the tag identifier) before sending the message to the NFC device.

6. The method of any preceding claim wherein the message comprises a uniform resource identifier, URI, for the computer, wherein the URI includes the counter value and the identifier of the tag.

7. The method of any of claims 6 wherein the computer is a remote server on the internet and the uniform resource identifier is an internet address associated with the computer.

8. The method of any of claims 1 to 5 wherein an identifier for the computer is stored on the NFC device.

9. The method of any preceding claim wherein the NFC device performs the step of requesting a message and generating the request using generic software.

10. The method of any preceding claim wherein the message is an NFC Data Exchange Format, NDEF, message.

11. The method of any preceding claim further comprising:
the NFC device including sensor data in the message and/or the request; and
the computer using the sensor data in order to verify the identifier of the user.

12. The method of claim 11 further comprising the NFC device taking a photograph or recording audio in order to provide the sensor data.

13. A time entry recording system tag comprising:
a counter for providing a representation of a counter value;
an identifier of the tag; and
a message generator configured, in response to receiving a request from a NFC device associated with a user of the time entry recording system, to provide the NFC device with a message comprising the identifier of the tag and the representation of the counter value, and at least a signature-protected counter value and identifier,
wherein the tag is associated with a function of the time entry recording system.

14. A computer for a time entry recording system, configured to:
receive a request from a NFC device, the request comprising:
an identifier of the tag that is associated with a function of a time entry recording system, and
a representation of a counter value;
verify the counter value; and
verify the signature value; and
record a time associated with the function of the system and a user of the NFC device upon verification of the counter value and the signature value.

15. A building comprising a tag according to claim 13 mounted on the building.
